# EUROPÄISCHE PATENTSCHRIFT

(11) **EP 3 383 637 B1**
(45) Veröffentlichungstag und Bekanntmachung des Hinweises auf die Patenterteilung: **03.03.2021**
(21) Anmeldenummer: 16760029.5
(22) Anmeldetag: 29.08.2016
(51) Int. Cl.: B32B 1/08, F16L 11/10, F16L 11/115, F16L 11/20

(54) **UMLAGESCHLAUCH MIT WENIGSTENS EINEM UMLAGENSCHUTZ**
TRANSFER HOSE HAVING AT LEAST ONE TRANSFER PROTECTION
TUYAU À ENVELOPPE DOTÉ D'AU MOINS UNE ENVELOPPE PROTECTRICE

(30) Priorität: 03.12.2015 DE 102015224173
(43) Veröffentlichungstag der Anmeldung: 10.10.2018
(73) Patentinhaber: ContiTech Schlauch GmbH, 30165 Hannover (DE)
(72) Erfinder: BRÜHNE, Klaus, 34497 Korbach (DE); SCHMELTER, Klaus, 59929 Brilon (DE); TASSEKI, Metin, 34497 Korbach (DE)
(74) Vertreter: Continental Corporation
(86) Internationale Anmeldenummer: PCT/EP2016/070273
(87) Internationale Veröffentlichungsnummer: WO 2017/092894

(56) Entgegenhaltungen:
- DE-B3- 10 334 443

## Beschreibung

Die Erfindung betrifft einen Umlageschlauch mit wenigstens einem Umlagenschutz, der insbesondere bei hohen Temperaturen zum Einsatz kommt.

Gattungsgemäße Umlageschläuche sind zum Beispiel aus WO2014/019796A2 bekannt. Es handelt sich um flexible Schläuche, die mit einer äußeren Lage aus Festigkeitsträgern, der so genannten Umlage, versehen sind. Innerhalb der umhüllenden äußeren Lage können derartige Schläuche mehrere Lagen oder Schichten aus unterschiedlichen, Elastomeren, thermoplastischen Elastomeren oder Thermoplasten und Festigkeitsträgern aufweisen. Die äußere Lage aus Festigkeitsträgern kann als Geflecht, Gestrick, Gewirke, Gewebe oder dergleichen vorliegen.
Wie in WO2014/019796A2 bereits beschrieben, ist es möglich, auf die Umlage, d.h. auf die außen liegenden Festigkeitsträger, einen Schutz aus Resorcinformaldehydlatex (RFL) oder Fluorpolymer aufzubringen, der die Fasern vor äußeren Einflüssen, wie bspw. mechanische oder chemische Beschädigungen, schützt.
Nachteilig bei einem derartigen Umlagenschutz ist, dass der Auftrag mit Hilfe organischer Lösemittel erfolgen muss und sich Schwankungen bzw. Unregelmäßigkeiten des Umlagenschutzes durch das unterschiedliche Verdampfen der Lösemittelkomponente ergeben. Aus dem Einsatz organischer Lösemittel entstehen aufwendige Auflagen aus Umwelt- und Sicherheitsgründen, zum Beispiel das Installieren von bestimmten Absaugvorrichtungen, das Einhalten definierter MAK-Werte und ggf. weitere Schutzmaßnahmen für Mensch und Umwelt. Die Verwendung von möglichst geringen Konzentrationen organischer Lösemittel führt zu einer höheren Viskosität, wodurch die RFL-Lösungen und / oder die Fluorpolymer-Lösungen entweder gar nicht oder nur sehr oberflächlich in die Fasern der Umlage eindringen können. Beim Schneiden der Schläuche fransen die Fasern an den Schnittkanten dadurch weiterhin stark aus, was einerseits nicht den Kundenvorstellungen entspricht und andererseits auch die Lebensdauer der Umlage und somit des gesamten Umlageschlauches negativ beeinträchtigt.

Zur Reduzierung von organischen Lösemitteln wird in DE 103 34 443 B3 die Verwendung einer Zusammensetzung zum Einfärben der äußeren Lage von Textilumlageschläuchen beschrieben, bei der ein Tensid, ein Farbmittel und eine Film- oder eine Heizschmelzmasse benötigt wird. Hierbei kann ggfs. eine Acrylatdispersion, Polyurethan-Polyvinylacetat- oder Latexemulsion als Filmbildner eingesetzt werden.

Im Rahmen einer Weiterentwicklung von WO2014/019796A2 besteht die Aufgabe der Erfindung somit darin, einen Umlageschlauch mit wenigstens einem Umlagenschutz bereitzustellen, der die oben genannten Nachteile beseitigt oder zumindest deutlich reduziert.

Gelöst wird diese Aufgabe dadurch, dass der Umlagenschutz des Umlageschlauches auf der Basis wenigstens einer Kunstharzdispersion auf Wasserbasis ist, wobei die wässrige Kunstharzdispersion auf der Basis wenigstens eines Styrolacrylats ist.

Gemäß Römpp Chemielexikon Online sind Kunstharze synthetische Harze, die " [...] auf synthetischem Wege über Polymerisations- oder Polykondensations-Reaktionen gewonnen werden und sehr unterschiedliche chemische Zusammensetzungen haben. Synthetische Harze sind im Allgemeinen flüssige oder feste amorphe Produkte ohne scharfen Erweichungs- oder Schmelzpunkt. Zu den synthetischen Harzen gehören u. a. Kohlenwasserstoff-(Petroleumharze), Harnstoff-, Alkyd-, Epoxid-, Melamin-, Phenol-, Polyester-, ungesättigte Polyesterharze (UP-Harze), Polyurethan-, Keton-, Cumaron-Inden-, Isocyanat-, Polyamid- und Terpen-Phenol-Harze [...]". Die Definition der Harze erfolgt mittels DIN 55958.

Durch die Verwendung wenigstens einer wässrigen Kunstharzdispersion auf der Basis wenigstens eines Styrolacrylats werden zusätzlich zu den Umwelt- und Gesundheitsaspekten folgende Verbesserungen erzielt:
Die Kunstharzdispersion kann frei von organischen Lösemitteln aufgebracht werden. Durch die so vorhandene geringere und vor allem konstante Viskosität kann die Dispersion in die Umlage eindringen und dort einzelne Fasern miteinander verkleben. Die Verklebung der Fasern verhindert das Ausfransen beim Schneiden, Stanzen, etc. Dadurch werden die Technischen Sauberkeitswerte deutlich verbessert, z. Bsp. Prüfungen gem. VDA19 Technische Sauberkeit.
Besondere Umwelt- und Sicherheitsauflagen fallen weg, da keine gesundheitsgefährdenden Stoffe eingesetzt werden.
Die Lagerzeit des aufzutragenden Umlagenschutzes wird von ca. 4 bis 8 Wochen auf ca. 12 Monate erhöht.
Es können weitere Zusatzstoffe in die Dispersion eingebracht werden, ohne deren Eigenschaften zu verschlechtern. Hierbei kann es sich bspw. um Partikel, insbesondere Metallpartikel, zur Erhöhung des Strahlungs- bzw. Wärmeschutzes, oder um Pigmente und / oder farbgebende Substanzen zur farbigen Gestaltung der Umlage handeln. Auch Zusatzstoffe zur Einstellung der elektrischen Leitfähigkeit oder der Antistatik sind möglich.
Weiterhin kann die Beschaffenheit des Umlagenschutzes einfach über den Wasseranteil eingestellt werden.
Der Umlagenschutz auf der Basis einer wässrigen Kunstharzdispersion führt zu einer Verbesserung der Medienbeständigkeit, z.B. gegenüber Batteriesäure, UV-Licht, etc. Zusätzlich wird ebenso die Geometriehaltigkeit bei Formschläuchen erzielt.

Erfindungsgemäß wird eine wässrige Kunstharzdispersion auf der Basis wenigstens eines Styrolacrylats gezeigt. Der Feststoffgehalt liegt hierbei bevorzugt zwischen 10 und 40 Gew.-% bei einem pH-Wert zwischen 7 und 8.
In einer bevorzugten Ausführungsform ist die wässrige Kunstharzdispersion auf der Basis wenigstens eines Styrolacrylats, frei von organischen Lösemitteln, d.h. die Menge an organischen Lösemitteln beträgt 0 Gew.-%.

Unter organischen Lösemitteln werden hierbei Kohlenwasserstoffe, halogenierte Kohlenwasserstoffe, Alkohole, Glykole, Ketone, Nitroverbindungen, Aminoverbindungen, Amide und Kohlenstoff-Schwefelverbindungen verstanden.

Neben Wasser und den bereits erwähnten Kunstharzen kann der Umlagenschutz noch weitere Bestandteile enthalten. Hierbei kann es sich um weitere Bindemittel, Farbstoffe oder Pigmente, z. Bsp. Titandioxid oder Glimmer, Füllstoffe, wie bspw. Calciumcarbonat, Silikate oder Quarzmehl, Stabilisatoren, Entschäumer, Verdickungsmittel und / oder Konservierungsmittel handeln.
Ein derartiger Umlageschlauch findet vorzugsweise Verwendung im Bereich Turboladerschmierung, Turboladerkühlung, Kompressoren, Kraftstoffsystemen, Dieselpartikelfiltern (DPF), Getriebe- und Motorkühlung oder in Bereichen, in denen aggressive Medien unter hohen Temperaturen transportiert werden müssen. Der Umlageschlauch kann hierbei in gerader oder auch in geformter Ausführung, z.B. als Schlauchkrümmer verwendet werden.

Wie bereits eingangs erwähnt können derartige Schläuche mehrere Lagen oder Schichten aus unterschiedlichen, Elastomeren, thermoplastischen Elastomeren oder Thermoplasten enthalten. Ebenso können neben der Umlage noch eine oder mehrere eingebettete Festigkeitsträgerlagen vorhanden sein. Hierfür können alle der fachkundigen Person bekannten Festigkeitsträgerwerkstoffe verwendet werden.
Grundsätzlich können erfindungsgemäß alle Elastomere, thermoplastische Elastomere oder Thermoplaste eingesetzt werden. Bevorzugt sind Elastomere, thermoplastische Elastomere oder Thermoplaste, die eine Temperaturbeständigkeit von größer oder gleich 150°C aufweisen.
Die Elastomere sind beispielsweise ausgewählt aus der Gruppe, bestehend aus: (teil)hydrierter Nitrilkautschuk (HNBR) und / oder Fluor-Kautschuk (FKM) und / oder Polyepichlorhydrin (ECO) und / oder Ethylen-Vinylacetat-Kautschuk (EVA) und / oder Acrylat-Kautschuk (ACM) und / oder Ethylen-Acrylat-Kautschuk (AEM) und / oder Silikonkautschuk (MQ, VMQ, PVMQ, FVMQ) und / oder Fluorierter Methylsilikonkautschuk (MFQ) und / oder Perfluorinierter Propylen-Kautschuk (FFPM) und / oder Perfluorcarbon-Kautschuk (FFKM) und / oder Ethylen-Propylen-DienKautschuk (EPDM).
Besonders gute Ergebnisse hinsichtlich der dynamischen Stabilität bei hohen Temperaturen lassen sich erzielen, wenn HNBR, FKM, FPM, ACM, AEM und / oder Silikonkautschuk verwendet wird, wobei FKM, FPM und AEM besonders gut geeignet sind.
Die genannten Elastomere können alleine oder im Verschnitt mit wenigstens zwei Elastomeren eingesetzt werden.
Ebenso ist es möglich, die Elastomere im Verschnitt mit Thermoplastischen Elastomeren und / oder Thermoplasten zu verwenden.
Als Thermoplastisches Elastomer findet vorzugsweise wenigstens ein Thermoplastisches Elastomer mit Polycarbonatanteil (TPE-C)Verwendung.

Als Material für die Festigkeitsträger der Umlage können alle der fachkundigen Person bekannten natürlichen und synthetischen Materialien verwendet werden.
Als synthetische Materialien kommen insbesondere synthetische Polymere, wie bspw. Polyacrylnitril, Polypropylen, Polyester, Polyamid, Polyurethan, Polyphenylensulfid, Polyoxadiazol, Aramide, wie p-Aramid, m-Aramid oder co-poly para Aramid, Polyimid, Polyetherimid, Polyetheretherketon, Polyethylen-2,6-naphthalat, Polyphenylen, Polyphenylenoxid, Polyphenylenether, Polybenzoxazole, Polyvenylalkohol in Frage. Bei den natürlichen Materialien kann es sich um Steinwolle oder Asbest oder um Baumwolle, Flachs oder Hanf, oder um Wolle, Cellulose, Modal oder Seide, handeln.
Anorganische Materialien wie Glas, Keramik, Kohlenstoff (Carbon), Metall oder Gestein, wie bspw. Basalt, sind ebenso denkbar.
Die genannten Werkstoffe können hierbei alleine oder in Kombination, z.B. als Hybrid oder als Mischgeflecht, verwendet werden.

Der erfindungsgemäße Umlageschlauch kann zusätzlich mit einer biegesteifen Verstärkung, wie sie bspw. aus EP 202 436 A2 für Schläuche mit einer (elastomeren) Deckschicht bekannt sind, ausgerüstet sein. Bei der biegesteifen Verstärkung handelt es sich vorzugsweise um Monofile, auch als Monofilamente bezeichnet, welche gleich- oder gegensinnig um bzw. in die Umlage gewickelt sind. Die Monofile können dabei auch gekreuzt gewickelt sein. Die Monofile können aus einem metallischen, wie bspw. Edelstahl, oder einem nicht-metallischen Werkstoff, wie bspw. PPS oder POD, aufgebaut sein. D.h. das Material der biegesteifen Verstärkung kann hierbei gleich oder verschieden vom Material der Umlage sein.

Die Umlage wird als textiles Flächengebilde in Form von Geflecht, Cord, Gestrick, Gewirk, Gewebe, Vlies oder Gelege aufgebracht, wobei vorzugsweise die Aufbringung als Geflecht erfolgt. Die Umlageschicht kann dabei einlagig oder mehrlagig ausgebildet sein. Bevorzugt hat die Umlageschicht 1 bis 5 Lagen, besonders bevorzugt 1 bis 3 Lagen und ganz besonders bevorzugt 1 bis 2 Lagen.

Die Erfindung wird nun anhand eines Ausführungsbeispiels unter Bezugnahme auf schematische Zeichnungen erläutert.

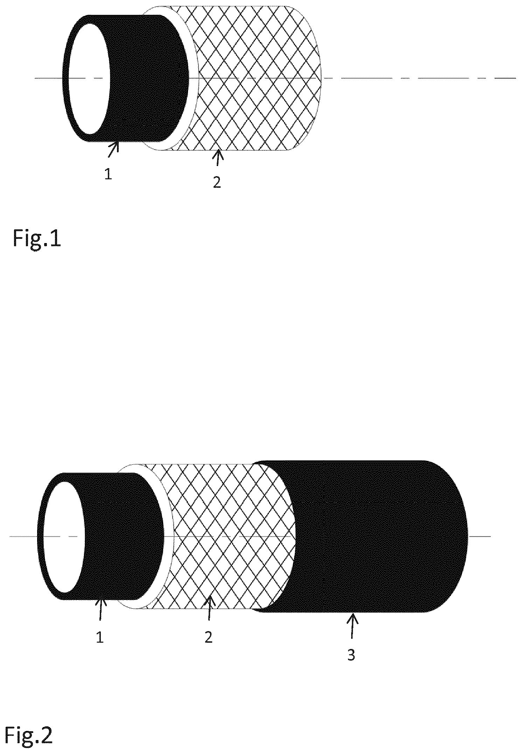

- Fig. 1: zeigt einen Umlageschlauch aufgebaut aus: Innenschicht 1, Umlageschicht 2
- Fig. 2: zeigt einen erfindungsgemäßen Umlageschlauch aufgebaut aus: Innenschicht 1, Umlageschicht 2, Umlagenschutz 3

### Bezugszeichenliste

### (Teil der Beschreibung)

- 1: Innenschicht
- 2: Umlageschicht
- 3: Umlagenschutz

## Patentansprüche

1. Mehrschichtiger Umlageschlauch enthaltend wenigstens eine Innenschicht (1) und eine Umlageschicht (2) mit wenigstens einem Umlagenschutz (3), **dadurch gekennzeichnet, dass** der Umlagenschutz (3) auf der Basis wenigstens einer Kunstharzdispersion auf Wasserbasis ist, wobei die wässrige Kunstharzdispersion auf der Basis wenigstens eines Styrolacrylats ist.

2. Mehrschichtiger Umlageschlauch gemäß Anspruch 1, **dadurch gekennzeichnet, dass** die Umlageschicht (2) aus Polyphenylensulfid (PPS) und / oder Polyoxadiazol (POD) und / oder Aramid (AR) und / oder Polyimid (PI) und / oder Polyetheretherketon (PEEK) und / oder Polyethylen-2,6-naphthalat (PEN) und / oder Polyphenylen (PPP) und / oder Polyphenylenoxid (PPO) und / oder Polyphenylenether (PPE) und / oder Polybenzoxazol (PBO) und / oder Kohlenstofffasern (CF) und / oder Metallfasern (MF) und / oder Glasfasern (GF) und / oder Polyester (PES) und / oder Baumwolle (CO) und / oder Cellulose und / oder Modal und / oder Keramikfasern und / oder Kohlenstoffasern und / oder Metallfasern und / oder Gesteinsfasern aufgebaut ist.

3. Mehrschichtiger Umlageschlauch gemäß Anspruch 2, **dadurch gekennzeichnet, dass** die Umlageschicht (2) aus Gesteinsfasern aufgebaut ist.

4. Mehrschichtiger Umlageschlauch gemäß Anspruch 3, **dadurch gekennzeichnet, dass** das Gestein Basalt ist.

5. Verwendung eines mehrschichtigen Umlageschlauchs nach einem der Ansprüche 1 bis 2 als Schlauch für die Turboladerschmierung, für Kompressor-Schläuche, für Dieselpartikelfiltersysteme, für Kraftstoffschläuche, für Kühlwasserschläuche und für Ölschläuche.

## Claims

1. Multilayered mantle hose containing at least one inner layer (1) and a mantle layer (2) comprising at least one mantle protectant (3), **characterized in that** the mantle protectant (3) is based on at least one water-based synthetic resin dispersion, wherein the aqueous synthetic resin dispersion is based on at least one styrene acrylate.

2. Multilayered mantle hose according to Claim 1, **characterized in that** the mantle layer (2) is constructed from polyphenylene sulfide (PPS) and/or polyoxadiazole (POD) and/or aramid (AR) and/or polyimide (PI) and/or polyether ether ketone (PEEK) and/or polyethylene-2,6-naphthalate (PEN) and/or polyphenylene (PPP) and/or polyphenylene oxide (PPO) and/or polyphenylene ether (PPE) and/or polybenzoxazole (PBO) and/or carbon fibres (CF) and/or metal fibres (MF) and/or glass fibres (GF) and/or polyester (PES) and/or cotton (CO) and/or cellulose and/or modal and/or ceramic fibres and/or carbon fibres and/or metal fibres and/or rock fibres.

3. Multilayered mantle hose according to Claim 2, **characterized in that** the mantle layer (2) is constructed from rock fibres.

4. Multilayered mantle hose according to Claim 3, **characterized in that** the rock is basalt.

5. Use of a multilayered mantle hose according to any of Claims 1 to 2 as a hose for turbocharger lubrication, for compressor hoses, for diesel particulate filter systems, for fuel hoses, for coolant water hoses and for oil hoses.

## Revendications

1. Tuyau à enveloppe multicouche contenant au moins une couche intérieure (1) et une couche enveloppante (2) comportant au moins une protection d'enveloppe (3), **caractérisé en ce que** la protection d'enveloppe (3) est à base d'au moins une dispersion de résine synthétique à base aqueuse, la dispersion de résine synthétique aqueuse étant à base d'au moins un styrène-acrylate.

2. Tuyau à enveloppe multicouche selon la revendication 1, **caractérisé en ce que** la couche enveloppante (2) est composée d'un poly(sulfure de phénylène) (PSP) et/ou d'un polyoxadiazole (POD) et/ou d'un aramide (AR) et/ou d'un polyimide (PI) et/ou d'une polyétheréthercétone (PEEC) et/ou d'un 2,6-naphtalate de polyéthylène (PEN) et/ou d'un polyphénylène (PPP) et/ou d'un poly(oxyde de phénylène) (POP) et/ou d'un poly(éther de phénylène) (PEP) et/ou d'un polybenzoxazole (PBO) et/ou de fibres de carbone (FC) et/ou de fibres métalliques (FM) et/ou de fibres de verre (FV) et/ou d'un polyester (PES) et/ou de coton (CO) et/ou de cellulose et/ou de modal et/ou de fibres de céramique et/ou de fibres de carbone et/ou de fibres métalliques et/ou de fibres de pierre.

3. Tuyau à enveloppe multicouche selon la revendication 2, **caractérisé en ce que** la couche enveloppante (2) est composée de fibres de pierre.

4. Tuyau à enveloppe multicouche selon la revendication 3, **caractérisé en ce que** la pierre est le basalte.

5. Utilisation d'un tuyau à enveloppe multicouche selon l'une quelconque des revendications 1 et 2 en tant que tuyau de lubrification de turbocompresseur, pour des tuyaux de compresseur, pour des systèmes de filtre à particules diesel, pour des tuyaux de carburant, pour des tuyaux d'eau de refroidissement et pour des tuyaux d'huile.
